# FASCICULE DE BREVET EUROPEEN

(11) **EP 2 349 688 B1**
(45) Date de publication et mention de la délivrance du brevet: **10.09.2014**
(21) Numéro de dépôt: 09797097.4
(22) Date de dépôt: 26.11.2009
(51) Int. Cl.: B29C 70/24, D03D 25/00, F01D 5/28, B29D 99/00, B29C 70/22, C04B 35/571, C04B 35/628, B29L 31/08

(54) **AUBE DE TURBOMACHINE EN MATERIAU COMPOSITE ET PROCEDE POUR SA FABRICATION**
VERBUNDMATERIAL TURBOMOTORLEITSCHAUFEL UND HERSTELLUNGSVERFAHREN DAFÜR
COMPOSITE MATERIAL TURBINE ENGINE VANE, AND METHOD FOR ITS MANUFACTURING

(30) Priorité: 28.11.2008 FR 0858090
(43) Date de publication de la demande: 03.08.2011
(73) Titulaire: HERAKLES, 33185 Le Haillan (FR); SNECMA, 75015 Paris (FR)
(72) Inventeur: COUPE, Dominique, F-33160 Le Haillan (FR); ROUSSILLE, Clément, F-33200 Bordeaux (FR); GOERING, Jonathan, York, Maine 03909 (US); MATEO, Julien, F-33360 Carignan de Bordeaux (FR); EBERLING-FUX, Nicolas, F-33140 Villenave d'Ornon (FR); RENON, Guillaume, F-77000 Vaux Le Penil (FR)
(74) Mandataire: Joly, Jean-Jacques
(86) Numéro de dépôt international: PCT/FR2009/052309
(87) Numéro de publication internationale: WO 2010/061140

(56) Documents cités:
- EP-A- 1 526 285
- US-A1- 2007 248 780

## Description

### Arrière-plan de l'invention

L'invention concerne des aubes de turbomachine en matériau composite comportant un renfort fibreux densifié par une matrice.

Le domaine visé est celui d'aubes de turbines à gaz pour moteurs aéronautiques ou turbines industrielles.

La réalisation d'aubes en matériau composite pour des turbomachines a déjà été proposée. On pourra se référer par exemple au document EP 1 526 285 qui décrit la fabrication d'une aube de soufflante par réalisation d'une préforme fibreuse par tissage tridimensionnel et densification de la préforme par une matrice organique, selon le préambule des revendications indépendantes.

Par ailleurs, pour la réalisation de pièces structurales de turbomachine exposées en service à des températures élevées, l'utilisation de matériaux composites thermostructuraux et notamment de matériaux composites à matrice céramique (CMC) a déjà été proposée. En effet, par rapport à des alliages métalliques, de tels matériaux peuvent présenter une tenue améliorée aux températures élevées et ont une moindre masse. Or, en particulier pour des turbines à gaz de moteurs aéronautiques, la diminution de masse et la réduction d'émissions polluantes par augmentation de la température sont recherchées.

### Objet et résumé de l'invention

Il est donc souhaitable de pouvoir disposer d'aubes de turbomachine en matériau composite, notamment mais non nécessairement en matériau composite thermostructural tel qu'en CMC, pour des turbines ou compresseurs de turbomachines, aubes qui présentent les propriétés mécaniques requises tout en ayant des formes relativement complexes.

A cet effet, selon la présente invention, il est proposé un procédé de fabrication d'une aube de turbomachine en matériau composite comprenant un renfort fibreux densifié par une matrice, le procédé comprenant :
- la réalisation par tissage tridimensionnel d'une ébauche fibreuse en une seule pièce,
- la mise en forme de l'ébauche fibreuse pour obtenir une préforme fibreuse en une seule pièce ayant une première partie formant préforme de pale et pied d'aube et au moins une deuxième partie formant préforme de plateforme ou talon d'aube, et
- la densification de la préforme par une matrice pour obtenir une aube en matériau composite ayant un renfort fibreux constitué par la préforme et densifié par la matrice, et formant une seule pièce avec plateforme et/ou talon intégrés.

En réalisant le renfort fibreux de l'aube à partir d'une ébauche obtenue en une seule pièce par tissage tridimensionnel, on peut assurer une imbrication mutuelle au moins partielle entre les parties du renfort fibreux correspondant aux parties de l'aube formant pale et pied et formant plateforme ou talon.

On contribue ainsi à conférer les propriétés mécaniques requises pour une aube à plateforme et/ou talon intégrés, notamment au niveau de la liaison entre la partie formant pale et pied et la ou chaque partie formant plateforme ou talon.

Selon une particularité avantageuse du procédé, dans la direction longitudinale de l'ébauche fibreuse correspondant à la direction longitudinale de l'aube à fabriquer, l'ébauche fibreuse comprend un premier ensemble de plusieurs couches de fils qui sont liées entre elles pour former une première partie de l'ébauche correspondant à la préforme de pale et pied d'aube, et un deuxième ensemble de plusieurs couches de fils qui sont liées entre elles au moins localement pour former au moins une deuxième partie de l'ébauche correspondant à une préforme de plateforme ou talon d'aube, en ce que les fils du premier ensemble de couches de fils ne sont pas liés aux fils du deuxième ensemble de couches de fils et en ce que le premier ensemble de couches de fils est traversé par des fils du deuxième ensemble de couches de fils au niveau de l'emplacement de la ou de chaque deuxième partie de l'ébauche.

L'aménagement de zones de déliaison permet une mise en forme de la préforme fibreuse sans coupe de fils de liage, une telle coupe pouvant amoindrir la tenue mécanique du renfort fibreux, donc de l'aube fabriquée.

Selon une autre particularité du procédé, l'ébauche fibreuse est tissée avec un deuxième ensemble continu de couches de fils et la mise en forme de l'ébauche fibreuse comprend l'élimination par découpe de parties du deuxième ensemble de couches de fils extérieures à la ou à chaque deuxième partie de l'ébauche fibreuse.

Selon encore une autre particularité du procédé, à l'emplacement ou au moins à l'un des emplacements où le premier ensemble de couches de fils est traversé par des fils du deuxième ensemble de couches de fils, l'intersection entre une couche de fils du premier ensemble et une couche de fils du deuxième ensemble suit une ligne non orthogonale à la direction longitudinale de l'ébauche fibreuse. On peut ainsi fabriquer une aube en matériau composite avec une plateforme et/ou un talon qui s'étend d'une façon générale non perpendiculairement à la direction longitudinale de l'aube.

Selon encore une autre particularité du procédé, dans la première partie de l'ébauche fibreuse et dans une direction correspondant à celle s'étendant le long du profil d'une pale d'épaisseur variable dans l'aube à fabriquer, le nombre de couches de fils en direction longitudinale dans le premier ensemble de couches de fils est constant. Les fils du premier ensemble de fils peuvent alors être de titre et/ou de contexture variable.

Avantageusement, l'on réalise par tissage tridimensionnel une bande comprenant une succession d'ébauches fibreuses. Celles-ci peuvent ensuite être découpées dans la bande. Les ébauches peuvent être tissées avec la direction longitudinale de l'aube à fabriquer en sens trame ou en sens chaîne.

Selon la présente invention, il est proposé aussi une aube de turbomachine en matériau composite comprenant un renfort fibreux obtenu par tissage tridimensionnel de fils et densifié par une matrice, laquelle aube comprend une première partie constitutive de pale et pied d'aube formant une seule pièce avec au moins une deuxième partie constitutive d'une plateforme ou d'un talon d'aube et les deux parties de renfort fibreux correspondant à la première et la deuxième partie de l'aube sont au moins en partie mutuellement imbriquées avec des fils de l'une des parties de renfort fibreux pénétrant dans l'autre partie de renfort fibreux.

L'aube peut être en un matériau composite à matrice céramique.

Selon une particularité de l'aube, des fils constitutifs de la partie du renfort fibreux correspondant à la deuxième partie de l'aube traversent la partie du renfort fibreux correspondant à la première partie de l'aube.

La pale de l'aube peut avoir un profil d'épaisseur variable le long duquel la partie de renfort fibreux correspondant à la première partie de l'aube a, dans la direction longitudinale de l'aube, un nombre constant de couches de fils ayant un titre et/ou une contexture variable, ou un nombre variable de couches de fils.

L'invention vise aussi une turbomachine équipée d'une aube telle que définie ci-avant.

### Brève description des dessins

L'invention sera mieux comprise à la description faite ci-après, à titre indicatif mais non limitatif, en référence aux dessins annexés sur lesquels :
- la figure 1 est une vue en perspective d'une aube de turbomachine à plateforme et talon intégrés ;
- la figure 2 illustre de façon très schématique la disposition de deux ensembles de couches de fils dans une ébauche fibreuse tissée tridimensionnelle destinée à la réalisation d'une préforme fibreuse pour une aube telle que celle illustrée par la figure 1 ;
- les figures 3, 4 et 5 illustrent des étapes successives de réalisation d'une préforme fibreuse pour une aube telle qu'illustrée par la figure 1, à partir de l'ébauche fibreuse de la figure 2 ;
- la figure 6 est une vue en coupe montrant le profil, mis à plat, d'une pale d'aube telle que celle de la figure 1 ;
- la figure 7 est une vue en coupe d'un ensemble de couches de fils de chaîne permettant d'obtenir un profil tel que celui de la figure 6 ;
- les figures 8A et 8B sont des vues en coupe chaîne montrant un mode de tissage de l'ébauche fibreuse de la figure 2 ;
- la figure 9 est une vue partielle en coupe selon un plan parallèle aux directions chaîne et trame dans une partie de l'ébauche fibreuse de la figure 2 correspondant à l'emplacement de jonction entre pale et plateforme d'aube ;
- la figure 10 est une vue partielle en coupe trame dans une partie de l'ébauche fibreuse de la figure 2 correspondant à l'emplacement de jonction entre pale et talon d'aube ;
- la figure 11A est une vue en coupe trame montrant un exemple de disposition de fils de trame dans une partie d'ébauche fibreuse correspondant à une partie de pied de pale ;
- les figures 11B à 11D sont des vues en coupe trame montrant des plans de chaîne pour un exemple de tissage tridimensionnel (multicouches) dans la partie d'ébauche fibreuse de la figure 11A ;
- la figure 12 est une vue schématique partielle en coupe montrant un autre mode de réalisation d'une partie d'ébauche correspondant à un pied de pale ;
- les figures 13 et 14 illustrent très schématiquement deux modes de réalisation d'une bande fibreuse tissée obtenue par tissage tridimensionnel comprenant une pluralité d'ébauches fibreuses telles que celle de la figure 2 ;
- la figure 15 indique des étapes successives d'un mode de réalisation d'un procédé de fabrication d'une aube de turbomachine conformément à l'invention ; et
- la figure 16 indique des étapes successives d'un autre mode de réalisation d'un procédé de fabrication d'une aube de turbomachine conformément à l'invention.

### Description détaillée de modes de réalisation

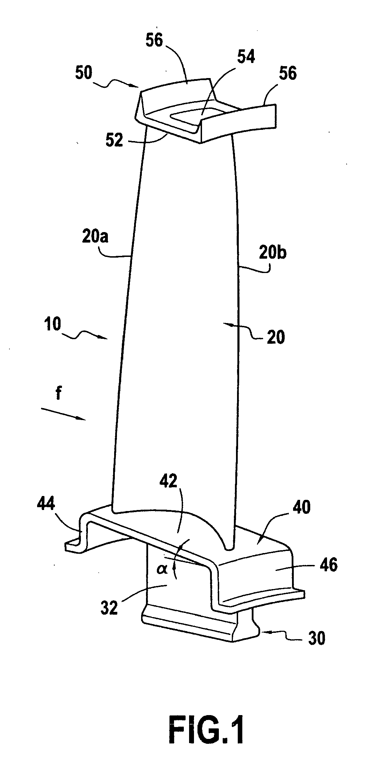

L'invention est applicable à différents types d'aubes de turbomachine à plateformes et/ou talon intégrés, notamment des aubes de compresseur et de turbine de différents corps de turbines à gaz, par exemple une aube de roue mobile de turbine basse pression (BP), telle que celle illustrée par la figure 1.

L'aube 10 de la figure 1 comprend de façon en soi bien connue, une pale 20, un pied 30 formé par une partie de plus forte épaisseur, par exemple à section en forme de bulbe, prolongé par une échasse 32, une plateforme intérieure 40 située entre l'échasse 32 et la pale 20 et une plateforme extérieure ou talon 50 au voisinage de l'extrémité libre de la pale.

La pale 20 s'étend en direction longitudinale entre la plateforme 40 et le talon 50 et présente en section transversale un profil incurvé d'épaisseur variable entre son bord d'attaque 20a et son bord de fuite 20b.

L'aube 10 est montée sur un rotor de turbine (non illustré) par engagement du pied 30 dans un logement de forme correspondante aménagé à la périphérie du rotor. Le pied 30 se prolonge par l'échasse 32 pour se raccorder à la face interne (ou inférieure) de la plateforme 40.

A son extrémité radiale interne, la pale 20 se raccorde à la plateforme 40 sur une face externe (ou supérieure) 42 de la plateforme qui délimite, à l'intérieur, la veine d'écoulement de flux gazeux dans la turbine. Dans ses parties d'extrémité amont et aval (dans le sens f d'écoulement du flux gazeux), la plateforme se termine par des becquets 44 et 46. Dans l'exemple illustré, la face 42 de la plateforme est inclinée en formant globalement un angle non nul α par rapport à la normale à la direction longitudinale de l'aube. Selon le profil souhaité de la surface intérieure de la veine d'écoulement de flux gazeux, l'angle α pourrait être nul, ou la face 42 pourrait avoir un profil globalement non rectiligne, par exemple incurvé.

A son extrémité radiale externe, la pale se raccorde au talon 50 sur une face interne (inférieure) 52 du talon qui délimite, à l'extérieur, la veine d'écoulement du flux gazeux. Du côté externe (supérieur), le talon délimite une dépression ou baignoire 54. Le long des bords amont et aval de la baignoire 54, le talon porte des lèchettes 56 à profil en forme de dents dont les extrémités peuvent pénétrer dans une couche de matériau abradable d'un anneau de turbine (non représenté) pour réduire le jeu entre le sommet d'aube et l'anneau de turbine. Dans l'exemple illustré, la face 52 du talon s'étend sensiblement perpendiculairement à la direction longitudinale de l'aube. En variante, selon le profil souhaité de la surface extérieure de la veine d'écoulement de flux gazeux, la face 52 pourrait être inclinée en formant globalement un angle non nul par rapport à la normale à la direction longitudinale de l'aube ou la face 52 pourrait avoir un profil globalement non rectiligne, par exemple incurvé.

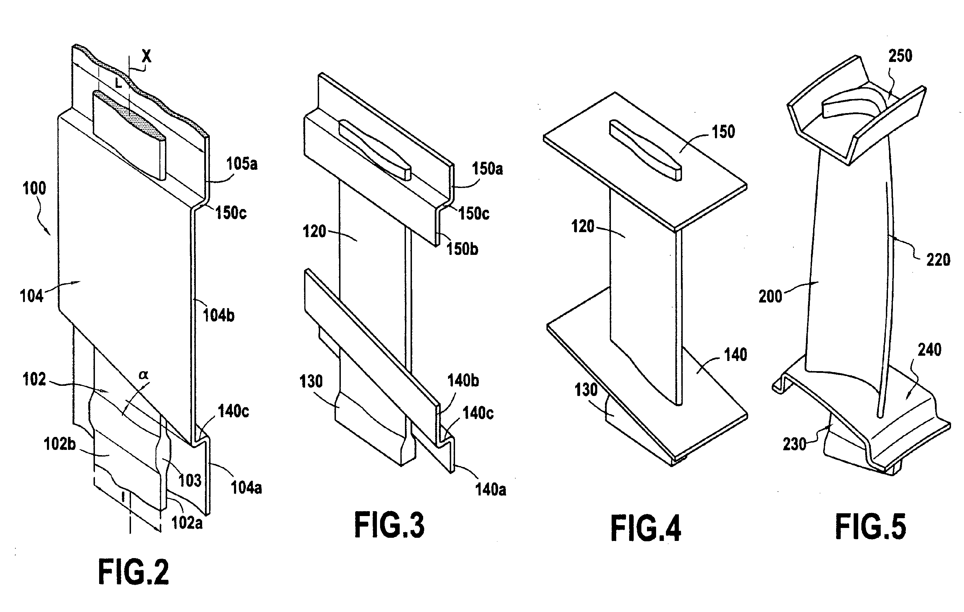

La figure 2 montre très schématiquement une ébauche fibreuse 100 à partir de laquelle une préforme fibreuse d'aube peut être mise en forme afin, après densification par une matrice et usinage éventuel, d'obtenir une aube en matériau composite à plateforme et talon intégrés telle que celle illustrée par la figure 1.

L'ébauche 100 comprend deux parties 102, 104 obtenues par tissage tridimensionnel ou tissage multicouches, seules les enveloppes de ces deux parties étant représentées sur la figure 2. La partie 102 est destinée, après mise en forme, à constituer une partie de préforme fibreuse d'aube correspondant à une préforme de pale et pied d'aube. La partie 104 est destinée, après mise en forme, à constituer les parties de préforme fibreuse d'aube correspondant à des préformes de plateforme et talon d'aube.

Les deux parties 102, 104 sont sous forme de bandes s'étendant de façon générale dans une direction X correspondant à la direction longitudinale de l'aube à réaliser. La bande fibreuse 102 présente, dans sa partie destinée à former une préforme de pale, une épaisseur variable déterminée en fonction de l'épaisseur de profil de la pale de l'aube à réaliser. Dans sa partie destinée à former une préforme de pied, la bande fibreuse 102 présente une surépaisseur 103 déterminée en fonction de l'épaisseur du pied de l'aube à réaliser.

La bande fibreuse 102 a une largeur l choisie en fonction de la longueur du profil développé (à plat) de la pale et du pied de l'aube à réaliser tandis que la bande fibreuse 104 a une largeur L supérieure à l choisie en fonction des longueurs développées de la plateforme et du talon de l'aube à réaliser.

La bande fibreuse 104 est d'épaisseur sensiblement constante déterminée en fonction des épaisseurs de plateforme et de talon de l'aube à réaliser. La bande 104 comprend une première partie 104a qui s'étend le long et au voisinage d'une première face 102a de la bande 102, une deuxième partie 104b qui s'étend le long et au voisinage de la deuxième face 102b de la bande 102 et une troisième partie 105a qui s'étend le long et au voisinage de la première face 102a de la bande 102.

Les parties 104a et 104b se raccordent par une partie de raccordement 140c qui s'étend transversalement par rapport à la bande 102 à un emplacement correspondant à celui de la plateforme de l'aube à réaliser. La partie de raccordement 140c traverse la bande en formant un angle α par rapport à la normale à la direction longitudinale de l'ébauche fibreuse. Les parties 104b et 105a se raccordent par une partie de raccordement 150c qui s'étend transversalement par rapport à la bande 102 à un emplacement correspondant à celui du talon de l'aube à réaliser. Dans l'exemple représenté, la partie de raccordement 150c traverse la bande 102 sensiblement perpendiculairement à la direction longitudinale X de l'ébauche fibreuse. Selon la géométrie souhaitée au niveau du talon de l'aube, la partie de raccordement 150c pourra traverser la bande 102 en formant un angle non nul par rapport à la normale à la direction longitudinale X de l'ébauche, comme pour la plateforme. En outre, le profil de la partie de raccordement 140c et/ou celui de la partie de raccordement 150c pourra être curviligne au lieu d'être rectiligne comme dans l'exemple illustré.

Comme décrit plus en détail plus loin, les bandes 102 et 104 sont tissées simultanément par tissage tridimensionnel, sans liaison entre la bande 102 et les parties 104a 104b et 105a de la bande 104 et en tissant une pluralité d'ébauches 100 successives de façon continue dans la direction X.

Les figures 3 à 5 montrent très schématiquement comment une préforme fibreuse ayant une forme proche de celle de l'aube à fabriquer peut être obtenue à partir de l'ébauche fibreuse 100.

La bande fibreuse 102 est coupée à une extrémité dans la surépaisseur 103 et à une autre extrémité un peu au-delà de la partie de raccordement 150c pour avoir une bande 120 de longueur correspondant à la dimension longitudinale de l'aube à fabriquer avec une partie renflée 130 formée par une partie de la surépaisseur 103 et située à un emplacement correspondant à la position du pied de l'aube à fabriquer.

En outre, des découpes sont pratiquées aux extrémités des parties 104a, 105a de la bande 104 et dans la partie 104b de celle-ci pour laisser subsister des tronçons 140a et 140b de part et d'autre de la partie de raccordement 140c, et des tronçons 150a et 150b de part et d'autre de la partie de raccordement 150c, comme le montre la figure 3. Les longueurs des tronçons 140a, 140b et 150a, 150b sont déterminées en fonction des longueurs de plateforme et de talon dans l'aube à fabriquer.

Du fait de la déliaison entre la bande 102 de l'ébauche fibreuse, d'une part, et les parties 104a, 104b et 105a, d'autre part, les tronçons 140a 140b, 150a et 150b peuvent être rabattus perpendiculairement à la bande 102 sans couper de fils pour former des plateaux 140, 150, comme montré par la figure 4.

Une préforme fibreuse 200 de l'aube à fabriquer est ensuite obtenue par moulage avec déformation de la bande 102 pour reproduire le profil incurvé de la pale de l'aube et déformation des plateaux 140, 150 pour reproduire des formes semblables à celles de la plateforme et du talon de l'aube, comme le montre la figure 5. On obtient ainsi une préforme avec une partie 220 de préforme de pale, une partie 230 de préforme de pied (avec préforme d'échasse) et des parties 240, 250 de préforme de plateforme et de préforme de talon.

Comme décrit plus loin, les étapes de réalisation d'une préforme d'aube à partir d'une ébauche fibreuse sont avantageusement réalisées après traitement des fibres de l'ébauche et imprégnation de celle-ci par une composition de consolidation.

Un mode de tissage tridimensionnel de l'ébauche fibreuse 100 sera maintenant décrit plus en détail.

Il est supposé que le tissage est réalisé avec des fils de chaîne s'étendant dans la direction longitudinale X de l'ébauche, étant noté qu'un tissage avec des fils de trame dans cette direction est également possible.

La variation d'épaisseur de la bande 102 sur sa largeur est obtenue en utilisant des fils de chaîne de titre variable. On peut en variante ou en complément faire varier la contexture des fils de chaîne (nombre de fils par unité de longueur en sens trame), une contexture plus faible autorisant un amincissement plus important lors de la mise en forme de la préforme par moulage.

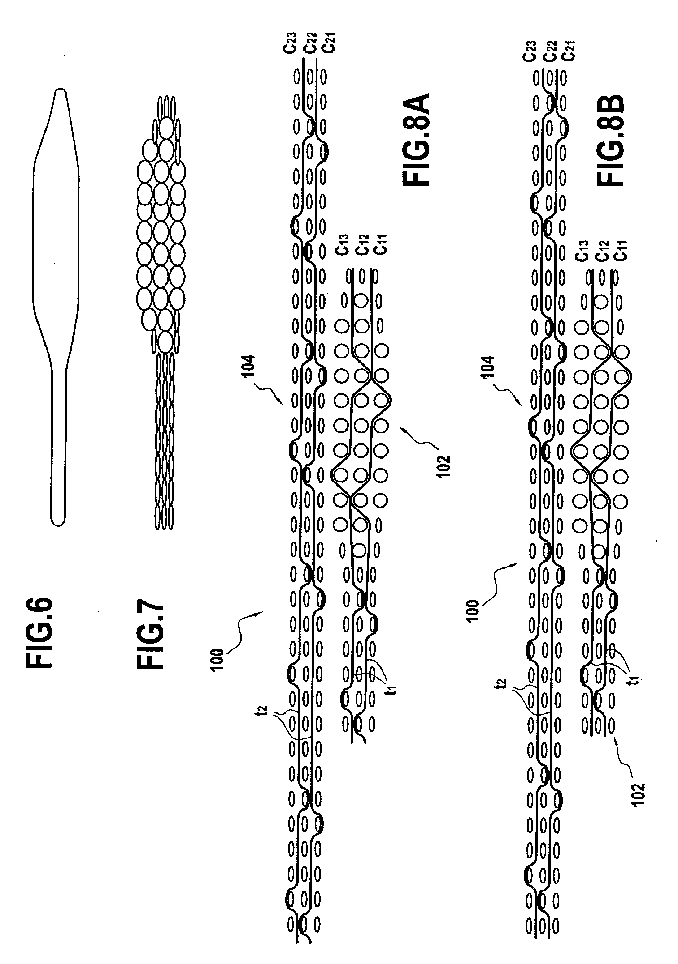

Ainsi, pour obtenir un profil de pale d'aube tel que représenté en projection à plat sur la figure 6, on peut utiliser 3 couches de fils de chaîne de titre et de contexture variables comme illustré par la figure 7.

Dans un exemple de réalisation, les fils utilisés peuvent être des fils de carbure de silicium (SiC) fournis sous la dénomination "Nicalon" par la société japonaise Nippon Carbon et ayant un titre (nombre de filaments) de 0,5K (500 filaments).

On forme la chaîne avec des fils SiC de 0,5K et des fils SiC de 1K obtenus par la réunion de deux fils de 0,5K, les deux fils étant réunis par guipage. Le guipage est réalisé avantageusement avec un fil à caractère fugace susceptible d'être éliminé après tissage, par exemple un fil en alcool polyvinylique (PVA) éliminable par dissolution dans l'eau.

Le tableau I ci-dessous donne, pour chaque colonne de fils de chaîne, la contexture (nombre de fils/cm dans la longueur du profil), le nombre de fils 0,5K, le nombre de fils 1K et l'épaisseur de profil en mm, celle-ci variant ici entre 1 mm et 2,5 mm environ :

**Tableau I**

| | | | | | | | | | | | | | | | | | | | |
|---|---|---|---|---|---|---|---|---|---|---|---|---|---|---|---|---|---|---|---|
| Colonne | 1 | 2 | 3 | 4 | 5 | 6 | 7 | 8 | 9 | 10 | 11 | 12 | 13 | 14 | 15 | 16 | 17 | 18 | 19 |
| Contexture | 6 | 6 | 6 | 6 | 6 | 6 | 6 | 8 | 8 | 8 | 8 | 8 | 8 | 8 | 8 | 8 | 8 | 8 | 6 |
| Nb fils 0,5K | 3 | 3 | 3 | 3 | 3 | 3 | 3 | 2 | 1 | 0 | 0 | 0 | 0 | 0 | 0 | 0 | 2 | 1 | 3 |
| Nb fils 2×0,5K | 0 | 0 | 0 | 0 | 0 | 0 | 0 | 1 | 2 | 3 | 3 | 3 | 3 | 3 | 3 | 3 | 1 | 2 | 0 |
| Epaisseur | 1 | 1 | 1 | 1 | 1 | 1 | 1,2 | 1,5 | 2 | 2,2 | 2,4 | 2,5 | 2,4 | 2,4 | 2,2 | 2,1 | 1,8 | 1,5 | 1,2 |

Bien entendu, selon les titres de fils disponibles, différentes combinaisons de nombres de couches de fils et de variations de contexture et de titre pourront être adoptées pour le profil à obtenir.

Les figures 8A, 8B montrent, en coupe chaîne, deux plans successifs d'une armure pouvant être utilisée pour le tissage de l'ébauche fibreuse 100 hors de la surépaisseur 103.

La bande 102 de l'ébauche fibreuse 100 comprend un ensemble de couches de fils de chaîne, le nombre de couches étant ici par exemple égal à 3 (couches C₁₁, C₁₂, C₁₃). Les fils de chaîne sont liés par des fils de trame t₁ par tissage tridimensionnel.

La bande 104 comprend aussi un ensemble de couches de fils de chaîne par exemple également égal à 3 (couches C₂₁, C₂₂, C₂₃) liés par des fils de trame t₂ par tissage tridimensionnel, comme la bande 102.

On note que les fils de trame t₁ ne s'étendent pas dans les couches de fils de chaîne de la bande 104 et que les fils de trame t₂ ne s'étendent pas dans les couches de fils de chaîne de la bande 102 afin d'assurer une déliaison.

Dans l'exemple illustré, le tissage est un tissage multicouches réalisé avec une armure de type satin, ou multi-satin. D'autres types de tissage tridimensionnel pourront être utilisés, par exemple un tissage multicouches à armure multi-toile ou un tissage à armure "interlock". Par tissage "interlock", on entend ici une armure de tissage dans laquelle chaque couche de fils de trame lie plusieurs couches de fils de chaîne avec tous les fils d'une même colonne de trame ayant le même mouvement dans le plan de l'armure.

Différents modes de tissage tridimensionnel sont notamment décrits dans le document WO 2006/136755 dont le contenu est incorporé ici par voie de référence.

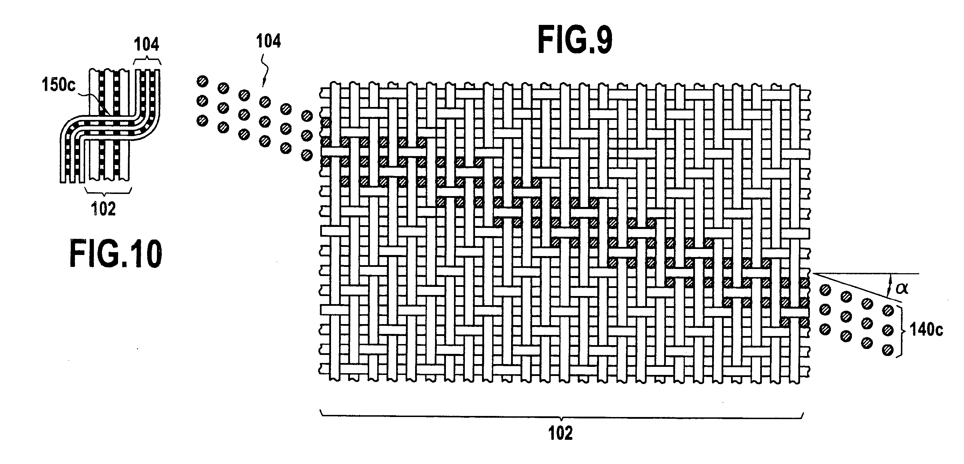

La figure 9 est une vue en coupe parallèlement aux sens chaîne et trame au niveau de la traversée de la bande 102 par la partie de raccordement 140c de la bande 104, les fils de chaîne de cette partie de raccordement étant vus en coupe. Chaque couche de fils de chaîne s'étend, dans cette partie de raccordement 140c, dans une direction faisant un angle α par rapport à la direction trame de la bande 102. Le passage de la bande 104 d'un côté à l'autre de la bande 102 est réalisé, lors du tissage, en faisant traverser l'ensemble des fils de chaîne et de trame de la bande 102 par chaque fil de chaîne de la bande 104, individuellement.

La figure 10 est une vue en coupe trame au niveau de la traversée de la bande 102 par la partie de raccordement 150c de la bande 104. Dans l'exemple illustré, comme déjà indiqué, la partie de raccordement 150c s'étend perpendiculairement à la direction chaîne de la bande 102. Toutefois, comme pour la partie de raccordement 140c, on pourra avoir une partie de raccordement 150c qui s'étend en faisant un angle non nul par rapport à la normale à la direction chaîne, selon l'orientation désirée du talon.

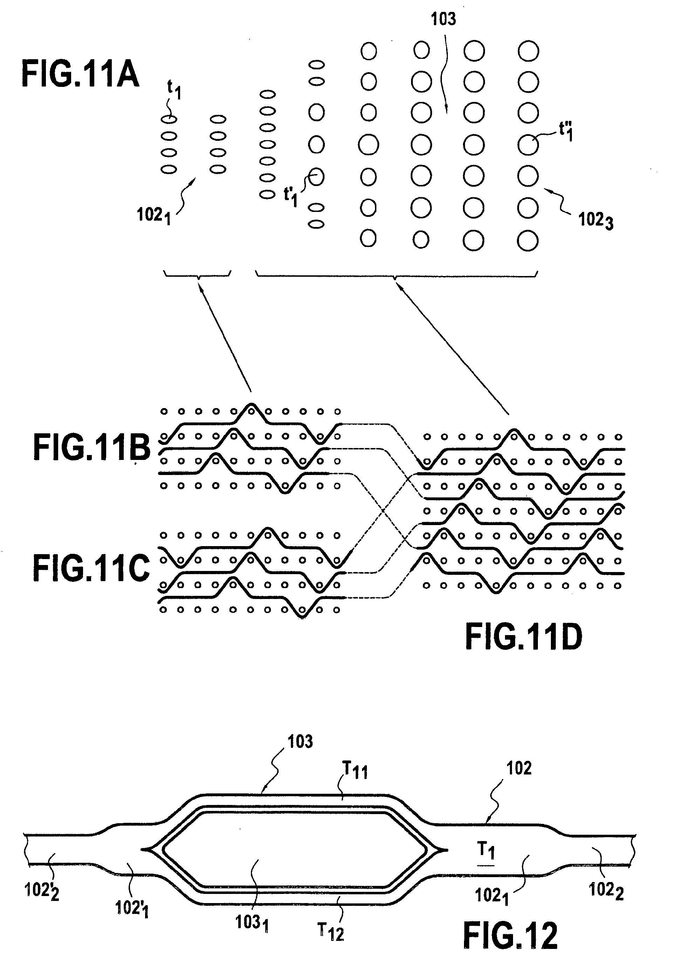

La surépaisseur 103 peut être obtenue en utilisant des fils de trame de plus gros titre et des couches supplémentaires de fils de trame, comme le montre par exemple la figure 11A.

Sur la figure 11A, le nombre de couches de fils de trame passe dans cet exemple de 4 à 7 entre une partie 102₁ de la bande 102, correspondant à l'échasse de l'aube et la partie 102₃ de la bande 102 présentant la surépaisseur 103.

En outre, des fils de trame t₁, t'₁, t"₁ de titres différents sont utilisés, les fils t₁ étant par exemple des fils de SiC "Nicalon" de titre 0,5K (500 filaments), les fils t'₁ étant obtenus par la réunion de 2 fils de 0,5K et les fils t"₁ par la réunion de 3 fils de 0,5K.

Le tissage dans la partie d'ébauche 102₃ nécessite des couches de fils de chaîne en plus grand nombre que dans la partie 102₁. Cela est avantageusement réalisé lors de la transition entre la partie 102₁ et la partie 102₃ en diminuant le nombre de plans de chaîne en constituant chaque plan de chaîne dans la partie 102₃ par la réunion des fils de chaîne de deux plans de chaîne de la partie 102₁. Les figures 11B et 11C montrent deux plans de chaîne voisins dans la partie 102₁ et la figure 11D montre un plan de chaîne obtenu dans la partie 102₃ par la réunion des plans de chaîne des figures 11B et 11C. Sur les figures 11B, 11C et 11D, on n'a pas montré les titres différents des fils de chaîne (comme montré sur la figure 7) ou des fils de trame (comme montré sur la figure 11A) par souci de simplicité. Entre les figures 11B, 11C, d'une part, et la figure 11D, d'autre part, les tirets montrent comment les fils de chaîne des différentes couches dans les figures 11B, 11C forment les couches de fils de chaîne de la figure 11D.

Bien entendu, différentes combinaisons de nombres de couches de trame et de titres de fils de trame pourront être adoptées pour former la surépaisseur 103.

Selon un autre mode de réalisation montré schématiquement sur la figure 12, la surépaisseur 103 peut être obtenue en introduisant un insert lors du tissage de la bande 102.

Sur la figure 12, l'ensemble T₁ de couches de fils de trame de la partie 102₁ de la bande 102 correspondant à l'échasse de l'aube est divisé par déliaison lors du tissage en deux sous-ensembles T₁₁, T₁₂ entre lesquels un insert 103₁ est introduit. Dans l'exemple illustré, la partie 102₁ a une épaisseur plus importante que celle de la partie 102₂ de la bande 102 correspondant à la pale de l'aube. La transition entre la partie 102₂ et la partie 102₁ pourra être réalisée de la même manière que décrit plus haut pour la transition entre les parties 102₁ et 102₃ de la figure 11A. La traversée de la nappe 102 par la nappe 104 au niveau de la partie de raccordement 140c de la figure 2 pourra éventuellement être réalisée à travers la partie 102₁ de plus forte épaisseur.

A l'extrémité de l'insert 103, opposée à la partie 102₁, les sous-ensembles T₁₁, T₁₂ de couches de fils de trame sont à nouveau réunis par tissage pour former une partie 102'₁ de même épaisseur que la partie 102₁, puis, par réduction d'épaisseur, une partie 102'₂ de même épaisseur que la partie 102₂, la partie 102'₂ formant la partie correspondant à une pale d'aube pour l'ébauche suivante tissée.

L'insert 103₁ est de préférence en céramique monolithique, de préférence le même matériau céramique que celui de la matrice du matériau composite de l'aube à fabriquer. Ainsi, l'insert 103₁ peut être un bloc de SiC obtenu par frittage de poudre SiC.

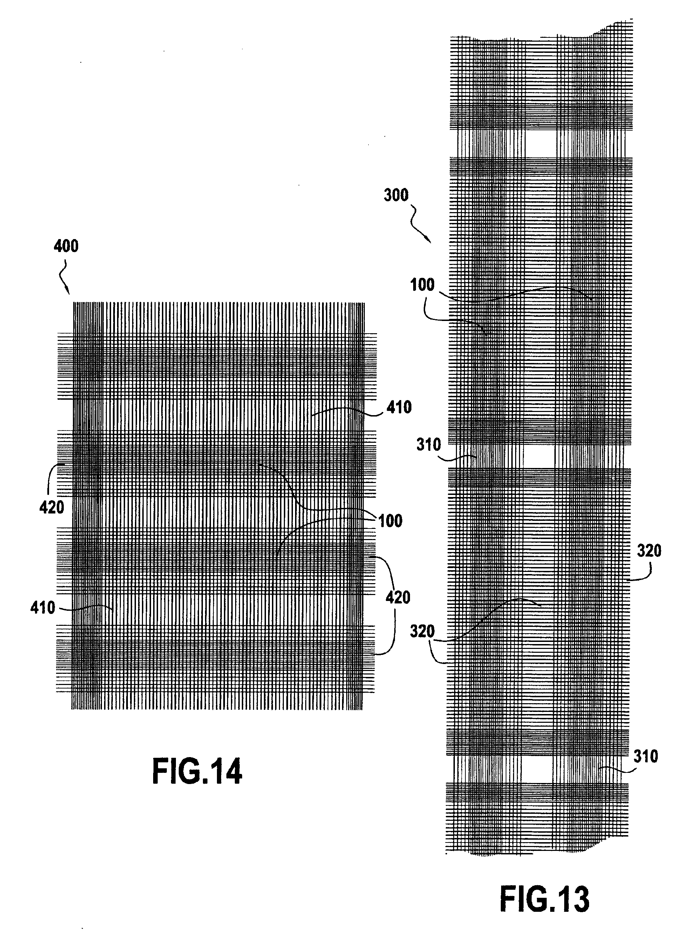

Comme le montre très schématiquement la figure 13, une pluralité d'ébauches fibreuses 100 peut être obtenue par tissage d'une bande 300 dans laquelle sont formées une ou plusieurs rangées d'ébauches fibreuses successives. Des zones de sur-longueurs 310, 320 sont ménagées en sens chaîne (uniquement fils de chaîne) et en sens trame (uniquement fils de trame) pour éviter des phénomènes de bord liés au tissage, laisser une plus grande liberté de déformation lors de la mise en forme de la préforme et aménager des zones de transition entre ébauches 100.

La figure 14 montre une variante de réalisation selon laquelle une bande 400 est réalisée avec une rangée d'ébauches 100 tissées en sens trame perpendiculairement à la direction longitudinale de la bande. Des zones de sur-longueurs 410, 420 sont également ménagées en sens chaîne et en sens trame. Plusieurs rangées d'ébauches 100 peuvent être tissées, la largeur de la bande 400 étant adaptée à cet effet.

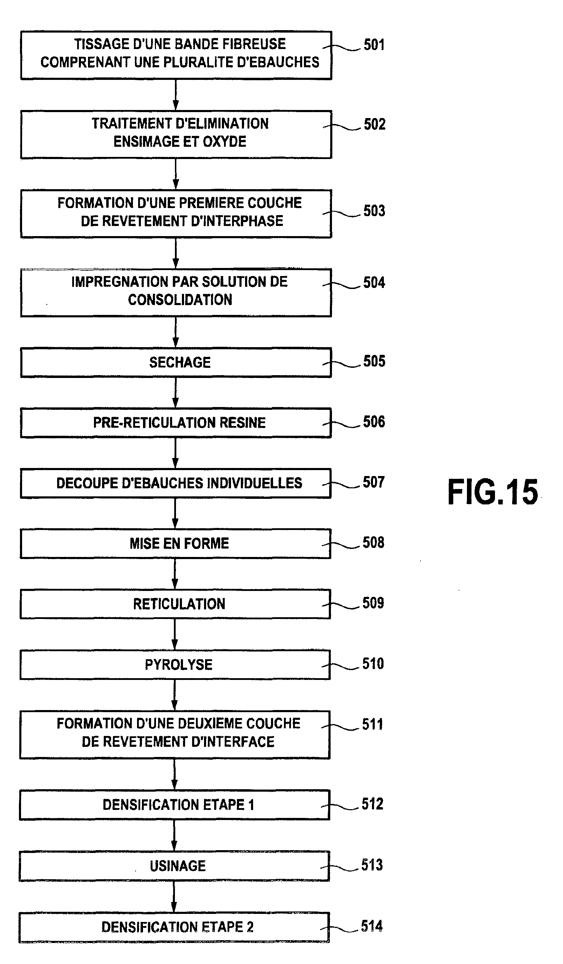

Des étapes successives d'un procédé de fabrication d'une aube en matériau composite selon un mode de mise en oeuvre de l'invention sont indiquées sur la figure 15.

A l'étape 501, une bande fibreuse est tissée par tissage tridimensionnel comprenant une pluralité d'ébauches fibreuses, par exemple plusieurs rangées d'ébauches fibreuses orientées en sens chaîne, comme montré sur la figure 13. Pour des aubes de turbomachine destinées à une utilisation à température élevée et notamment en environnement corrosif (notamment humidité), on utilise pour le tissage des fils formés de fibres en céramique, notamment des fibres de carbure de silicium (SiC).

A l'étape 502, la bande fibreuse est traitée pour éliminer l'ensimage présent sur les fibres et la présence d'oxyde à la surface des fibres. L'élimination de l'oxyde est obtenue par traitement acide, notamment par immersion dans un bain d'acide fluorhydrique. Si l'ensimage n'est pas éliminable par le traitement acide, un traitement préalable d'élimination de l'ensimage est réalisé, par exemple par décomposition de l'ensimage par bref traitement thermique.

A l'étape 503, une couche mince de revêtement d'interphase est formé sur les fibres de la bande fibreuse par infiltration chimique en phase gazeuse ou CVI ("Chemical Vapor Infiltration"). Le matériau du revêtement d'interphase est par exemple du carbone pyrolytique ou pyrocarbone (PyC), du nitrure de bore (BN) ou du carbone dopé au bore (BC, avec par exemple 5%at à 20%at de B, le complément étant C). La mince couche de revêtement d'interphase est de préférence de faible épaisseur, par exemple au plus égale à 100 nanomètres, voire au plus égale à 50 nanomètres, de manière à conserver une bonne capacité de déformation des ébauches fibreuses. De préférence, l'épaisseur est au moins égale à 10 nanomètres.

A l'étape 504, la bande fibreuse avec les fibres revêtues d'une mince couche de revêtement d'interphase est imprégnée par une composition de consolidation, typiquement une résine éventuellement diluée dans un solvant. On peut utiliser une résine précurseur de carbone, par exemple une résine phénolique ou furanique, ou une résine précurseur de céramique, par exemple une résine polysilazane ou polysiloxane précurseur de SiC.

Après séchage par élimination du solvant éventuel de la résine (étape 505), une pré-réticulation de la résine peut être effectuée (étape 506). La pré-réticulation, ou réticulation incomplète permet d'accroître la raideur, donc la tenue, tout en préservant la capacité de déformation nécessaire pour la réalisation de préformes d'aubes.

A l'étape 507, les ébauches fibreuses individuelles sont découpées, comme illustré par la figure 3.

A l'étape 508, une ébauche fibreuse ainsi découpée est mise en forme (comme illustré par les figures 4 et 5) et placée dans un moule par exemple en graphite pour conformation de la partie de préforme de pale et pied et des parties de préforme de plateforme et de talon.

Ensuite, la réticulation de la résine est achevée (étape 509) et la résine réticulée est pyrolysée (étape 510). La réticulation et la pyrolyse peuvent être enchaînées par élévation progressive de la température dans le moule.

Après pyrolyse, on obtient une préforme fibreuse consolidée par le résidu de pyrolyse. La quantité de résine de consolidation est choisie pour que le résidu de pyrolyse lie les fibres de la préforme de façon suffisante pour que celle-ci soit manipulable en conservant sa forme sans l'assistance d'un outillage, étant noté que la quantité de résine de consolidation est de préférence choisie aussi faible que possible.

Des étapes d'élimination d'ensimage, de traitement acide et de formation de revêtement d'interphase pour un substrat en fibres SiC sont connues. On pourra se référer au document US 5 071 679.

Une deuxième couche d'interphase est formée par CVI (étape 511) afin d'obtenir globalement une interphase fibres-matrice ayant une épaisseur suffisante pour assurer sa fonction de défragilisation du matériau composite. La deuxième couche d'interphase peut être en matériau choisi parmi PyC, BN, BC, pas nécessairement le même que celui de la première couche d'interphase. L'épaisseur de la deuxième couche d'interphase est de préférence au moins égale à 100 nanomètres.

La réalisation d'une interphase en deux couches, comme indiquée ci-avant est préférée. Elle est décrite dans la demande de brevet, français déposée sous le N° 08 54937 par la demanderesse.

Une densification par une matrice de la préforme consolidée est ensuite réalisée. Pour une aube de turbomachine destinée à une utilisation à température élevée, et notamment en milieu corrosif, la matrice est en céramique, par exemple en SiC. On peut réaliser la densification par CVI, auquel cas la formation de la deuxième couche d'interphase et la densification par la matrice peuvent être enchaînées dans un même four.

La densification peut être réalisée en deux étapes successives (étapes 512 et 514) séparées par une étape 513 d'usinage de l'aube aux dimensions désirées.

On notera qu'un pré-usinage peut être réalisé entre les étapes 509 et 510, c'est-à-dire après réticulation et avant pyrolyse de la résine.

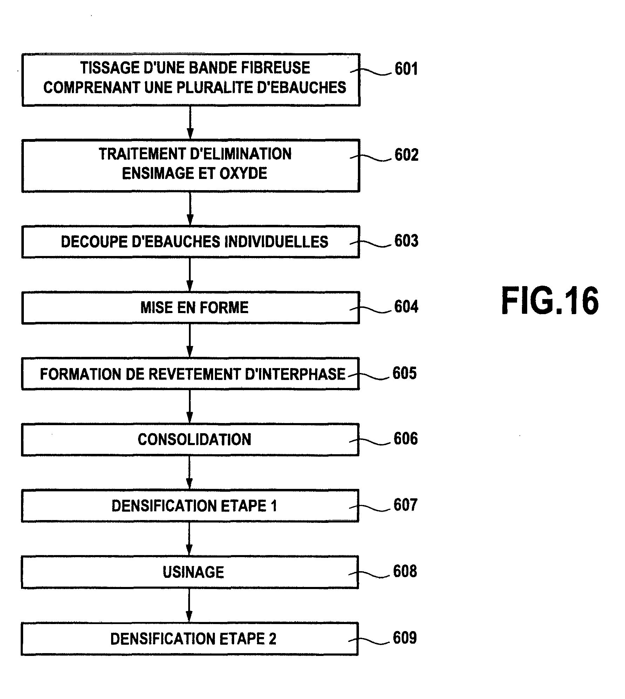

Des étapes successives d'un procédé de fabrication d'une aube en matériau composite selon un autre mode de mise en oeuvre de l'invention sont indiquées sur la figure 16.

L'étape 601 de tissage tridimensionnel d'une bande fibreuse comprenant une pluralité d'ébauches fibreuses et l'étape 602 de traitement d'élimination d'ensimage et d'oxyde sont semblables aux étapes 501 et 502 du mode de réalisation de la figure 15.

A l'étape 603, des ébauches fibreuses individuelles sont découpées dans la bande fibreuse, puis chaque ébauche fibreuse individuelle est mise en forme dans un moule ou conformateur (étape 604) pour obtenir une préforme fibreuse d'aube par conformation de la partie de préforme de pale et pied et des parties de préforme de plateforme et de talon.

A l'étape 605, un revêtement d'interphase de défragilisation est formé par CVI sur les fibres de la préforme maintenue dans le conformateur. Le matériau du revêtement d'interphase est par exemple PyC, BN ou BC, comme précédemment mentionné. L'épaisseur du revêtement d'interphase est d'environ une à quelques centaines de nanomètres.

La préforme étant toujours maintenue dans le conformateur, une consolidation de la préforme par densification partielle est réalisée (étape 606), la consolidation étant réalisée par formation de dépôt céramique sur les fibres par CVI.

La formation du revêtement d'interphase par CVI et la consolidation par dépôt céramique par CVI peuvent être enchaînées dans un même four CVI.

Le conformateur est de préférence en graphite et présente des trous facilitant le passage des phases gazeuses réactionnelles donnant le dépôt d'interphase et le dépôt céramique par CVI.

Lorsque la consolidation est suffisante pour que la préforme puisse être manipulée tout en conservant sa forme sans assistance d'outillage de maintien, la préforme consolidée est extraite du conformateur et la densification par une matrice céramique par CVI est réalisée. La densification peut être réalisée en deux étapes successives (étapes 607 et 609) séparées par une étape 608 d'usinage de l'aube aux dimensions désirées.

Dans ce qui précède, on a envisagé la réalisation d'un profil de pale à épaisseur variable par l'utilisation de fils de titre et/ou contexture variables. Il est possible, en variante, de réaliser la partie d'ébauche fibreuse correspondant à la partie de préforme de pale avec un certain nombre de couches de fils de même titre et avec contexture fixe, la variation d'épaisseur du profil étant réalisée lors de l'usinage après première étape de densification ou lors d'un pré-usinage de la préforme d'aube consolidée.

Par ailleurs, selon les conditions d'utilisation envisagées pour l'aube, les fibres du renfort fibreux de l'aube peuvent être en un matériau autre qu'une céramique, par exemple en carbone, et la matrice peut être en un matériau autre qu'une céramique, par exemple en carbone ou en une résine, l'invention étant bien entendu applicable aussi à la fabrication d'aubes en matériau composite à matrice organique.

## Revendications

1. Procédé de fabrication d'une aube (10) de turbomachine en matériau composite comprenant un renfort fibreux densifié par une matrice, le procédé comprenant :
- la réalisation par tissage tridimensionnel d'une ébauche fibreuse (100) en une seule pièce,
**caractérisé en ce qu'**il comprend:
- la mise en forme de l'ébauche fibreuse (100) pour obtenir une préforme fibreuse (200) en une seule pièce ayant une première partie (102) formant préforme de pale (220) et pied (230) d'aube et au moins une deuxième partie (104) formant préforme de plateforme (240) ou talon (250) d'aube, et
- la densification de la préforme (200) par une matrice pour obtenir une aube (10) en matériau composite ayant un renfort fibreux constitué par la préforme et densifié par la matrice, et formant une seule pièce avec plateforme (40) et/ou talon (50) intégrés.

2. Procédé selon la revendication 1, **caractérisé en ce que**, dans la direction longitudinale de l'ébauche fibreuse (100) correspondant à la direction longitudinale de l'aube à fabriquer, l'ébauche fibreuse comprend un premier ensemble de plusieurs couches de fils qui sont liées entre elles pour former une première partie (102) de l'ébauche correspondant à la préforme de pale et pied d'aube (220, 230), et un deuxième ensemble de plusieurs couches de fils qui sont liées entre elles au moins localement pour former au moins une deuxième partie (104) de l'ébauche correspondant à une préforme de plateforme ou talon d'aube (240, 250), **en ce que** les fils du premier ensemble de couches de fils ne sont pas liés aux fils du deuxième ensemble de couches de fils, et **en ce que** le premier ensemble de couches de fils est traversé par des fils du deuxième ensemble de couches de fils au niveau de la ou de chaque deuxième partie de l'ébauche.

3. Procédé selon la revendication 2, **caractérisé en ce que** l'ébauche fibreuse (100) est tissée avec un deuxième ensemble continu de couches de fils et la mise en forme de l'ébauche fibreuse comprend l'élimination par découpe de parties du deuxième ensemble de couches de fils extérieures à la ou à chaque deuxième partie de l'ébauche fibreuse.

4. Procédé selon l'une quelconque des revendications 2 et 3, **caractérisé en ce qu'**à l'emplacement ou au moins à l'un des emplacements où le premier ensemble de couches de fils est traversé par des fils du deuxième ensemble de couches de fils, l'intersection entre une couche de fils du premier ensemble et une couche de fils du deuxième ensemble suit une ligne non orthogonale à la direction longitudinale de l'ébauche fibreuse (100).

5. Procédé selon l'une quelconque des revendications 1 à 4, **caractérisé en ce que**, dans la première partie (102) de l'ébauche fibreuse et dans une direction correspondant à celle s'étendant le long du profil d'une pale d'épaisseur variable dans l'aube à fabriquer, le nombre de couches de fils dans le premier ensemble de couches de fils est constant.

6. Procédé selon la revendication 5, **caractérisé en ce que** les fils du premier ensemble de couches de fils sont de titre variable.

7. Procédé selon l'une quelconque des revendications 5 et 6, **caractérisé en ce que** la contexture des fils du premier ensemble de couches de fils est variable.

8. Procédé selon l'une quelconque des revendications 1 à 7, **caractérisé en ce que** l'on réalise par tissage tridimensionnel une bande comprenant une succession d'ébauches fibreuses.

9. Procédé selon l'une quelconque des revendications 1 à 8, **caractérisé en ce que** les ébauches (102, 104) sont tissées avec leur direction longitudinale correspondant à celle des aubes à fabriquer s'étendant en sens trame.

10. Procédé selon l'une quelconque des revendications 1 à 8, **caractérisé en ce que** les ébauches (102, 104) sont tissées avec leur direction longitudinale correspondant à celle des aubes à fabriquer s'étendant en sens chaîne.

11. Aube (10) de turbomachine en matériau composite comprenant un renfort fibreux obtenu par tissage tridimensionnel de fils et densifié par une matrice,
**caractérisée en ce que** l'aube comprend une première partie constitutive de pale et pied d'aube (20, 30) formant une seule pièce avec au moins une deuxième partie constitutive d'une plateforme ou d'un talon d'aube (40, 50) et les deux parties de renfort fibreux correspondant à la première et à la deuxième partie de l'aube sont au moins en partie mutuellement imbriquées, avec des fils de l'une des parties de renfort fibreux pénétrant dans l'autre partie de renfort fibreux.

12. Aube (10) selon la revendication 11, **caractérisé en ce qu'**elle est en matériau composite à matrice céramique.

13. Aube (10) selon l'une quelconque des revendications 11 et 12, **caractérisée en ce que** des fils constitutifs de la partie du renfort fibreux correspondant à la deuxième partie de l'aube (40, 50) traversent la partie du renfort fibreux correspondant à la première partie de l'aube (20, 30).

14. Aube (10) selon l'une quelconque des revendications 11 à 13, **caractérisée en ce que** la pale de l'aube a un profil d'épaisseur variable le long duquel la partie de renfort fibreux correspondant à la première partie de l'aube (20, 30) a un nombre constant de couches de fils s'étendant dans la direction longitudinale de l'aube et ayant un titre et/ou une contexture variables.

15. Aube (10) selon l'une quelconque des revendications 11 à 13, **caractérisée en ce que** la pale de l'aube a un profil d'épaisseur variable le long duquel la partie de renfort fibreux correspondant à la première partie de l'aube (20, 30) a un nombre variable de couches de fils s'étendant dans la direction longitudinale de l'aube.

16. Turbomachine équipée d'une aube (10) selon l'une quelconque des revendications 11 à 15 ou fabriquée selon le procédé de l'une quelconque des revendications 1 à 10.

## Patentansprüche

1. Verfahren zur Herstellung einer Schaufel (10) einer Turbomaschine aus Verbundwerkstoff mit einer durch eine Matrix verdichteten Faserverstärkung, wobei das Verfahren umfasst:
- die Herstellung eines einstückigen Faserrohlings (100) durch dreidimensionales Weben,
**dadurch gekennzeichnet, dass** es umfasst:
- das Informbringen des Faserrohlings (100), um einen einstückigen Faservorformling (200) zu erhalten, der ein einen Blatt- (220) und Schaufelfuß-Vorformling (230) bildendes erstes Teil (102) sowie wenigstens ein einen Plattform-(240) oder Schaufeldeckband-Vorformling (250) bildendes zweites Teil hat, und
- das Verdichten des Vorformlings (200) durch eine Matrix, um eine Schaufel (10) aus Verbundwerkstoff zu erhalten, die eine durch den Vorformling gebildete und durch die Matrix verdichtete Faserverstärkung aufweist und die mit integrierter/m Plattform (40) und/oder Deckband (50) ein einziges Stück bildet.

2. Verfahren nach Anspruch 1, **dadurch gekennzeichnet, dass** in der Längsrichtung des Faserrohlings (100), die der Längsrichtung der herzustellenden Schaufel entspricht, der Faserrohling eine erste Anordnung aus mehreren Fadenlagen, die untereinander verbunden sind, um ein erstes Teil (102) des Rohlings zu bilden, das dem Blatt- und Schaufelfuß-Vorformling (220, 230) entspricht, sowie eine zweite Anordnung aus mehreren Fadenlagen, die wenigstens lokal untereinander verbunden sind, um wenigstens ein zweites Teil (104) des Rohlings zu bilden, das einem Plattform- oder Schaufeldeckband-Vorformling (240, 250) entspricht, umfasst, dass die Fäden der ersten Anordnung aus Fadenlagen nicht mit den Fäden der zweiten Anordnung aus Fadenlagen verbunden sind, und dass die erste Anordnung aus Fadenlagen im Bereich des oder jedes zweiten Teils des Rohlings von Fäden der zweiten Anordnung aus Fadenlagen durchquert ist.

3. Verfahren nach Anspruch 2, **dadurch gekennzeichnet, dass** der Faserrohling (100) mit einer zweiten durchgehenden Anordnung aus Fadenlagen gewebt ist, und das Informbringen des Faserrohlings das Wegschneiden von Teilen der zweiten Anordnung aus Fadenlagen, die außerhalb des oder jedes zweiten Teils des Faserrohlings gelegen sind, umfasst.

4. Verfahren nach einem der Ansprüche 2 und 3, **dadurch gekennzeichnet, dass** an der Stelle oder wenigstens an einer der Stellen, an denen die erste Anordnung aus Fadenlagen von Fäden der zweiten Anordnung aus Fadenlagen durchquert wird, der Schnittpunkt zwischen einer Fadenlage der ersten Anordnung und einer Fadenlage der zweiten Anordnung einer Linie folgt, die zu der Längsrichtung des Faserrohlings (100) nicht orthogonal ist.

5. Verfahren nach einem der Ansprüche 1 bis 4, **dadurch gekennzeichnet, dass** in dem ersten Teil (102) des Faserrohlings und in einer Richtung, die derjenigen entspricht, die entlang dem Profil eines Blattes mit variabler Dicke in der herzustellenden Schaufel verläuft, die Anzahl der Fadenlagen in der ersten Anordnung aus Fadenlagen konstant ist.

6. Verfahren nach Anspruch 5, **dadurch gekennzeichnet, dass** die Fäden der ersten Anordnung aus Fadenlagen eine variable Feinheit aufweisen.

7. Verfahren nach einem der Ansprüche 5 und 6, **dadurch gekennzeichnet, dass** die Fadendichte der Fäden der ersten Anordnung aus Fadenlagen variabel ist.

8. Verfahren nach einem der Ansprüche 1 bis 7, **dadurch gekennzeichnet, dass** durch dreidimensionales Weben ein Band, das eine Folge von Faserrohlingen umfasst, hergestellt wird.

9. Verfahren nach einem der Ansprüche 1 bis 8, **dadurch gekennzeichnet, dass** die Rohlinge (102, 104) so gewebt sind, dass ihre Längsrichtung der in Schussrichtung verlaufenden der herzustellenden Schaufeln entspricht.

10. Verfahren nach einem der Ansprüche 1 bis 8, **dadurch gekennzeichnet, dass** die Rohlinge (102, 104) so gewebt sind, dass ihre Längsrichtung der in Kettrichtung verlaufenden der herzustellenden Schaufeln entspricht.

11. Schaufel (10) einer Turbomaschine aus Verbundwerkstoff mit einer Faserverstärkung, die durch dreidimensionales Weben von Fäden erhalten wird und durch eine Matrix verdichtet ist,
**dadurch gekennzeichnet, dass** die Schaufel ein das Blatt und den Schaufelfuß (20, 30) bildendes erstes Teil umfasst, das mit wenigstens einem eine Plattform oder ein Schaufeldeckband (40, 50) bildenden zweiten Teil ein einziges Stück bildet und die beiden Faserverstärkungsteile, die dem ersten und dem zweiten Teil der Schaufel entsprechen, wenigstens teilweise ineinandergefügt sind, wobei die Fäden von einem der Faserverstärkungsteile in das andere Faserverstärkungsteil eindringen.

12. Schaufel (10) nach Anspruch 11, **dadurch gekennzeichnet, dass** sie aus Keramikmatrix-Verbundwerkstoff besteht.

13. Schaufel (10) nach einem der Ansprüche 11 und 12, **dadurch gekennzeichnet, dass** Fäden, die das dem zweiten Teil der Schaufel (40, 50) entsprechende Teil der Faserverstärkung bilden, das dem ersten Teil der Schaufel (20, 30) entsprechende Teil der Faserverstärkung durchqueren.

14. Schaufel (10) nach einem der Ansprüche 11 bis 13, **dadurch gekennzeichnet, dass** das Blatt der Schaufel ein Profil mit variabler Dicke aufweist, entlang dessen das Faserverstärkungsteil, das dem ersten Teil der Schaufel (20, 30) entspricht, eine konstante Anzahl von Lagen aus Fäden, die in der Längsrichtung der Schaufel verlaufen und eine variable Feinheit und/oder eine variable Fadendichte aufweisen, hat.

15. Schaufel (10) nach einem der Ansprüche 11 bis 13, **dadurch gekennzeichnet, dass** das Blatt der Schaufel ein Profil mit variabler Dicke aufweist, entlang dessen das Faserverstärkungsteil, das dem ersten Teil der Schaufel (20, 30) entspricht, eine variable Anzahl von Lagen aus Fäden, die in der Längsrichtung der Schaufel verlaufen, hat.

16. Turbomaschine, die mit einer Schaufel (10) nach einem der Ansprüche 11 bis 15 oder hergestellt nach dem Verfahren von einem der Ansprüche 1 bis 10 ausgerüstet ist.

## Claims

1. A method of fabricating a turbomachine blade (1) out of a composite material comprising fiber reinforcement densified by a matrix, the method comprising:
· making a one-piece fiber blank (100) by three-dimensional weaving, **characterized in that** said method comprises:
· shaping the fiber blank (100) to obtain a one-piece fiber preform (200) having a first portion (102) forming a blade airfoil (220) and root preform (230) and at least one second portion (104) forming a blade platform preform (240, 250); and
· densifying the preform (200) with a matrix to obtain a composite material blade (10) having fiber reinforcement constituted by the preform and densified by the matrix, forming a single part with at least one incorporated platform (240, 250).

2. A method according to claim 1, **characterized in that**, in the longitudinal direction of the fiber blank (100) that corresponds to the longitudinal direction of the blade that is to be made, the fiber blank comprises a first set of a plurality of layers of yarns that are linked together to form a first portion (102) of the blank that corresponds to the preform for the blade airfoil and root (220, 230), and a second set of a plurality of layers of yarns that are linked together at least locally to form at least one second portion (104) of the blank that corresponds to a preform for a blade platform (240, 250), wherein the yarns of the first set of layers of yarns are not linked to the yarns of the second set of layers of yarns, and wherein the yarns of the second set of layers of yarns cross through the first set of layers of yarns at the level of the or each second portion of the blank.

3. A method according to claim 2, **characterized in that** the fiber blank (100) is woven with a second continuous set of layers of yarns and the shaping of the fiber blank comprises eliminating portions of the second set of layers of yarns external to the or each second portion of the fiber blank by cutting them away.

4. A method according to claim 2 or claim 3, **characterized in that**, at the location or at least at one of the locations where the second set of layers of yarns crosses through the first set of layers of yarns, the intersection between a layer of yarns of the first set and a layer of yarns of the second set follows a line that is not orthogonal to the longitudinal direction of the fiber blank (100).

5. A method according to any one of claims 1 to 4, **characterized in that**, in the first portion (102) of the fiber blank and in a direction that corresponds to the direction extending along the profile of an airfoil of varying thickness in the blade that is to be made, the number of layers of yarns in the first set of layers of yarns is constant.

6. A method according to claim 5, **characterized in that** the yarns of the first set of layers of yarns are of varying weights.

7. A method according to claim 5 or claim 6, **characterized in that** the yarns of the first set of layers of yarns are of varying counts.

8. A method according to any one of claims 1 to 7, **characterized in that** a strip comprising a succession of fiber blanks is made by three-dimensional weaving.

9. A method according to any one of claims 1 to 8, **characterized in that** the blanks (102, 104) are woven with their longitudinal direction that corresponds to the direction of the blades that are to be made extending in the weft direction.

10. A method according to any one of claims 1 to 8, **characterized in that** the blanks (102, 104) are woven with their longitudinal direction that corresponds to the direction of the blades that are to be made extending in the warp direction.

11. A turbomachine blade (10) made of composite material comprising fiber reinforcement obtained by three-dimensional weaving of yarns and densified by a matrix,
**characterized in that** the blade comprises a first portion constituting the blade airfoil and root (20, 30) formed as a single part together with at least one second portion constituting a blade platform (40, 50), and the two portions of the fiber reinforcement that corresponds to the first and second portions of the blade are mutually interlaced at least in part, with yarns of one of the first portions of the fiber reinforcement penetrating into the other portion of the fiber reinforcement.

12. A blade (10) according to claim 11, **characterized in that** it is made of ceramic matrix composite material.

13. A blade (10) according to claim 11 or claim 12, **characterized in that** the yarns constitutive of the portion of the fiber reinforcement that corresponds to the second portion of the blade (40, 50) cross through the portion of the fiber reinforcement that corresponds to the first portion of the blade (20, 30).

14. A blade (10) according to any one of claims 11 to 13, **characterized in that** the airfoil of the blade has a profile of varying thickness, along which the portion of the fiber reinforcement that corresponds to the first portion of the blade (20, 30) has a constant number of layers of yarns extending in the longitudinal direction of the blade and having varying weights and/or counts.

15. A blade (10) according to any one of claims 11 to 13, **characterized in that** the airfoil of the blade has a profile of varying thickness, along which the portion of the fiber reinforcement that corresponds to the first portion of the blade (20, 30) has a varying number of layers of yarns extending in the longitudinal direction of the blade.

16. A turbomachine fitted with a blade (10) according to any one of claims 11 to 15 or fabricated by implementing the method of any one of claims 1 to 10.
